# EUROPEAN PATENT APPLICATION

(11) **EP 4 024 148 A1**
(43) Date of publication of application: **06.07.2022**
(21) Application number: 21215095.7
(22) Date of filing: 16.12.2021
(51) Int. Cl.: G05B 19/042, G05B 9/02

(54) **DYNAMIC RISK ASSESSMENT VIOLATION MONITORING DURING A FUNCTIONAL SAFETY PROCESS**

(30) Priority: 04.01.2021 US 202117141109
(71) Applicant: Rockwell Automation Technologies, Inc., Mayfield Heights, OH 44124-6188 (US)
(72) Inventor: Nair, Suresh R., Mayfield Heights, OH, 44124 (US); Lane, Lee A., Mayfield Heights, OH, 44124 (US); Taylor, Brian J., Mayfield Heights, OH, 44124 (US); Cai, Yongyao, Mayfield Heights, OH, 44124 (US); Sacherski, Burt, Mayfield Heights, OH, 44124 (US); Killian, Ashley M., Mayfield Heights, OH, 44124 (US); Zomchek, Kevin, Mayfield Heights, OH, 44124 (US); Poublon, Michelle L., Mayfield Heights, OH, 44124 (US); Gao, Linxi, Mayfield Heights, OH, 44124 (US); Wolfe, Timothy P., Mayfield Heights, OH, 44124 (US); Jaeger, Rebecca R., Mayfield Heights, OH, 44124 (US); Foster, Wayne R., Mayfield Heights, OH, 44124 (US)
(74) Representative: Grünecker Patent- und Rechtsanwälte PartG mbB

(57) **Abstract**

A method for risk assessment violation monitoring during a functional safety process includes receiving parameters from a risk assessment of a portion of a system with physical devices. The parameters of the risk assessment are applicable to a safety device of a machine safety system. The safety device is configured to prevent a hazardous condition in the system. The method includes detecting a change of a condition of the safety device. The condition is indicative of a potential safety issue affecting operation of the machine safety system. The method includes comparing parameters related to the change of the condition of the safety device with the parameters from the risk assessment and sending an alert in response to determining that the change of the condition of the safety device results in a violation of the risk assessment.

## Description

### BACKGROUND INFORMATION

The subject matter disclosed herein relates to machine safety and more specifically to risk assessment violation monitoring of functional safety rated equipment.

### BRIEF DESCRIPTION

A method for risk assessment violation monitoring during a functional safety process is disclosed. An apparatus and a computer program product also perform the functions of the method. The method includes receiving parameters from a risk assessment of a portion of a system with physical devices. The parameters of the risk assessment arc applicable to a safety device of a machine safety system. The safety device is configured to prevent a hazardous condition in the system. The method includes detecting a change of a condition of the safety device. The condition is indicative of a potential safety issue affecting operation of the machine safety system. The method includes comparing parameters related to the change of the condition of the safety device with the parameters from the risk assessment and sending an alert in response to determining that the change of the condition of the safety device results in a violation of the risk assessment.

An apparatus for risk assessment violation monitoring during a functional safety process includes a processor and a memory that stores code executable by the processor to receive parameters from a risk assessment of a portion of a system with physical devices. The parameters of the risk assessment are applicable to a safety device of a machine safety system. The safety device is configured to prevent a hazardous condition in the system. The code is executable to detect a change of a condition of the safety device. The condition is indicative of a potential safety issue affecting operation of the machine safety system. The code is executable to compare parameters related to the change of the condition of the safety device with the parameters from the risk assessment and to send an alert in response to determining that the change of the condition of the safety device results in a violation of the risk assessment.

A computer program product for risk assessment violation monitoring during a functional safety process includes a computer readable storage medium having program code embodied therein. The program code is executable by a processor to receive parameters from a risk assessment of a portion of a system with physical devices. The parameters of the risk assessment are applicable to a safety device of a machine safety system. The safety device is configured to prevent a hazardous condition in the system. The program is code executable by a processor to detect a change of a condition of the safety device. The condition is indicative of a potential safety issue affecting operation of the machine safety system. The program is code executable by a processor to compare parameters related to the change of the condition of the safety device with the parameters from the risk assessment and send an alert in response to determining that the change of the condition of the safety device results in a violation of the risk assessment.

### BRIEF DESCRIPTION OF THE DRAWINGS

In order that the advantages of the embodiments of the invention will be readily understood, a more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram of a system for risk assessment violation monitoring during a functional safety process according to an embodiment;
Figure 2 is a schematic block diagram of an apparatus for risk assessment violation monitoring during a functional safety process according to an embodiment;
Figure 3 is a schematic block diagram of another apparatus for risk assessment violation monitoring during a functional safety process according to an embodiment;
Figure 4 is a flowchart diagram illustrating a method for risk assessment violation monitoring during a functional safety process according to an embodiment;
Figure 5 is a flowchart diagram illustrating another method for risk assessment violation monitoring during a functional safety process where a safety device has been changed according to an embodiment; and
Figure 6 is a flowchart diagram illustrating another method for risk assessment violation monitoring during a functional safety process according to an embodiment.

### DETAILED DESCRIPTION

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. The term "and/or" indicates embodiments of one or more of the listed elements, with "A and/or B" indicating embodiments of element A alone, element B alone, or elements A and B taken together.

Furthermore, the described features, advantages, and characteristics of the embodiments may be combined in any suitable manner. One skilled in the relevant art will recognize that the embodiments may be practiced without one or more of the specific features or advantages of a particular embodiment. In other instances, additional features and advantages may be recognized in certain embodiments that may not be present in all embodiments.

These features and advantages of the embodiments will become more fully apparent from the following description and appended claims or may be learned by the practice of embodiments as set forth hereinafter. As will be appreciated by one skilled in the art, aspects of the present invention may be embodied as a system, method, and/or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module," or "system." Furthermore, aspects of the present invention may take the form of a computer program product embodied in one or more computer readable medium(s) having program code embodied thereon.

Many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of program code may, for instance, comprise one or more physical or logical blocks of computer instructions which may, for instance, be organized as an object, procedure, or function. Nevertheless, the executables of an identified module need not be physically located together but may comprise disparate instructions stored in different locations which, when joined logically together, comprise the module and achieve the stated purpose for the module.

Indeed, a module of program code may be a single instruction, or many instructions, and may even be distributed over several different code segments, among different programs, and across several memory devices. Similarly, operational data may be identified and illustrated herein within modules and may be embodied in any suitable form and organized within any suitable type of data structure. The operational data may be collected as a single data set or may be distributed over different locations including over different storage devices, and may exist, at least partially, merely as electronic signals on a system or network. Where a module or portions of a module are implemented in software, the program code may be stored and/or propagated on in one or more computer readable medium(s).

The computer readable medium may be a tangible computer readable storage medium storing the program code. The computer readable storage medium may be, for example, but not limited to, an electronic, magnetic, optical, electromagnetic, infrared, holographic, micromechanical, or semiconductor system, apparatus, or device, or any suitable combination of the foregoing.

More specific examples of the computer readable storage medium may include but are not limited to a portable computer diskette, a hard disk, a random access memory ("RAM"), a read-only memory ("ROM"), an erasable programmable read-only memory ("EPROM" or Flash memory), a portable compact disc read-only memory ("CD-ROM"), a digital versatile disc ("DVD"), an optical storage device, a magnetic storage device, a holographic storage medium, a micromechanical storage device, or any suitable combination of the foregoing. In the context of this document, a computer readable storage medium may be any tangible medium that can contain, and/or store program code for use by and/or in connection with an instruction execution system, apparatus, or device.

The computer readable medium may also be a computer readable signal medium. A computer readable signal medium may include a propagated data signal with program code embodied therein, for example, in baseband or as part of a carrier wave. Such a propagated signal may take any of a variety of forms, including, but not limited to, electrical, electro-magnetic, magnetic, optical, or any suitable combination thereof. A computer readable signal medium may be any computer readable medium that is not a computer readable storage medium and that can communicate, propagate, or transport program code for use by or in connection with an instruction execution system, apparatus, or device. Program code embodied on a computer readable signal medium may be transmitted using any appropriate medium, including but not limited to wire-line, optical fiber, Radio Frequency ("RF"), or the like, or any suitable combination of the foregoing

In one embodiment, the computer readable medium may comprise a combination of one or more computer readable storage mediums and one or more computer readable signal mediums. For example, program code may be both propagated as an electro-magnetic signal through a fiber optic cable for execution by a processor and stored on RAM storage device for execution by the processor.

Program code for carrying out operations for aspects of the present invention may be written in any combination of one or more programming languages, including an object oriented programming language such as Python, Ruby, R, Java, Java Script, Smalltalk, C++, C sharp. Lisp, Clojure, PHP or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider). The computer program product may be shared, simultaneously serving multiple customers in a flexible, automated fashion.

The computer program product may be integrated into a client, server and network environment by providing for the computer program product to coexist with applications, operating systems and network operating systems software and then installing the computer program product on the clients and servers in the environment where the computer program product will function. In one embodiment software is identified on the clients and servers including the network operating system where the computer program product will be deployed that are required by the computer program product or that work in conjunction with the computer program product. This includes the network operating system that is software that enhances a basic operating system by adding networking features.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

The embodiments may transmit data between electronic devices. The embodiments may further convert the data from a first format to a second format, including converting the data from a non-standard format to a standard format and/or converting the data from the standard format to a non-standard format. The embodiments may modify, update, and/or process the data. The embodiments may store the received, converted, modified, updated, and/or processed data. The embodiments may provide remote access to the data including the updated data. The embodiments may make the data and/or updated data available in real time. The embodiments may generate and transmit a message based on the data and/or updated data in real time. The embodiments may securely communicate encrypted data. The embodiments may organize data for efficient validation. In addition, the embodiments may validate the data in response to an action and/or a lack of an action.

Aspects of the embodiments arc described below with reference to schematic flowchart diagrams and/or schematic block diagrams of methods, apparatuses, systems, and computer program products according to embodiments of the invention. It will be understood that each block of the schematic flowchart diagrams and/or schematic block diagrams, and combinations of blocks in the schematic flowchart diagrams and/or schematic block diagrams, can be implemented by program code. The program code may be provided to a processor of a general purpose computer, special purpose computer, sequencer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The program code may also be stored in a computer readable medium that can direct a computer, other programmable data processing apparatus, or other devices to function in a particular manner, such that the instructions stored in the computer readable medium produce an article of manufacture including instructions which implement the function/act specified in the schematic flowchart diagrams and/or schematic block diagrams block or blocks.

The program code may also be loaded onto a computer, other programmable data processing apparatus, or other devices to cause a series of operational steps to be performed on the computer, other programmable apparatus or other devices to produce a computer implemented process such that the program code which executed on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and computer program products according to various embodiments of the present invention. In this regard, each block in the schematic flowchart diagrams and/or schematic block diagrams may represent a module, segment, or portion of code, which comprises one or more executable instructions of the program code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may he used to indicate only the logical How of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and program code.

The description of elements in each figure may refer to elements of proceeding figures. Like numbers refer to like elements in all figures, including alternate embodiments of like elements.

As used herein, a list with a conjunction of "and/or" includes any single item in the list or a combination of items in the list. For example, a list of A, B and/or C includes only A. only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C.

A method for risk assessment violation monitoring during a functional safety process is disclosed. An apparatus and a computer program product also perform the functions of the method. The method includes receiving parameters from a risk assessment of a portion of a system with physical devices. The parameters of the risk assessment are applicable to a safety device of a machine safety system. The safety device is configured to prevent a hazardous condition in the system. The method includes detecting a change of a condition of the safety device. The condition is indicative of a potential safety issue affecting operation of the machine safety system. The method includes comparing parameters related to the change of the condition of the safety device with the parameters from the risk assessment and sending an alert in response to determining that the change of the condition of the safety device results in a violation of the risk assessment.

In some embodiments, the change of the condition of the safety device includes replacing the safety device with a new safety device with parameters different from the safety device being replaced and detecting the change of the condition of the safety device includes detecting that one or more parameters of the new safety device differ from parameters of the safety device being replaced. In further embodiments, comparing the parameters related to the change of the condition of the safety device with the parameters from the risk assessment includes comparing the parameters of the new safety device that differ from the parameters of the safety device being replaced with applicable parameters of the risk assessment. In another further embodiment, determining that the change of the condition of the safety device results in a violation of the parameters from the risk assessment includes determining that at least one parameter of the new safety device that differs from the parameters of the safety device being replaced results in a violation of the parameters from the risk assessment such that the machine safety system with the new safety device is out of compliance with the risk assessment.

In some embodiments, determining the change of the condition of the safety device includes determining that a parameter of the safety device has changed resulting in the safety device operating differently than prior to the change of the parameter. In other embodiments, determining the change of the condition of the safety device includes determining that operational cycles of the safety device are higher than an expected amount of operational cycles for the safety device. The operational cycles of the safety device are related to an expected lifetime of the safety device. In other embodiments, the parameters of the risk assessment differ from information available from the safety device indicative of the change of the condition of the safety device and the method includes using parameters from the safety device related to the change of the condition of the safety device to calculate the parameters related to the change of the condition of the safety device that are comparable to the parameters of the risk assessment.

In some embodiments, the method includes, in conjunction with setup of the safety device in the machine safety system, displaying a risk assessment user interface prior to receiving the parameters from the risk assessment. The risk assessment user interface facilitates entry of the parameters from the risk assessment. In other embodiments, during operation of the safety device in the machine safety system a signal from the safety device is configured to trigger an action intended to prevent injury to a user and/or damage to equipment of the system with the physical devices. In other embodiments, a violation of the parameters of the risk assessment results in a hazardous condition during operation of the system with physical devices.

An apparatus for risk assessment violation monitoring during a functional safety process includes a processor and a memory that stores code executable by the processor to receive parameters from a risk assessment of a portion of a system with physical devices. The parameters of the risk assessment are applicable to a safety device of a machine safety system. The safety device is configured to prevent a hazardous condition in the system. The code is executable to detect a change of a condition of the safety device. The condition is indicative of a potential safety issue affecting operation of the machine safety system. The code is executable to compare parameters related to the change of the condition of the safety device with the parameters from the risk assessment and to send an alert in response to determining that the change of the condition of the safety device results in a violation of the risk assessment.

In some embodiments, the change of the condition of the safety device includes replacing the safety device with a new safety device with parameters different from the safety device being replaced and the code executable by the processor to detect the change of the condition of the safety device includes code executable by the processor to detect that one or more parameters of the new safety device differ from parameters of the safety device being replaced. In further embodiments, the code executable by the processor to compare the parameters related to the change of the condition of the safety device with the parameters from the risk assessment includes code executable by the processor to compare the parameters of the new safety device that differ from the parameters of the safety device being replaced with applicable parameters of the risk assessment. In another further embodiment, the code executable by the processor to determine that the change of the condition of the safety device results in a violation of the parameters from the risk assessment includes code executable by the processor to determine that at least one parameter of the new safety device that differs from the parameters of the safety device being replaced results in a violation of the parameters from the risk assessment such that the machine safety system with the new safety device is out of compliance with the risk assessment.

In some embodiments, the code executable by the processor to determine the change of the condition of the safety device includes code executable by the processor to determine that a parameter of the safety device has changed resulting in the safety device operating differently than prior to the change of the parameter. In other embodiments, the code executable by the processor to determine the change of the condition of the safety device includes code executable by the processor to determine that operational cycles of the safety device are higher than an expected amount of operational cycles for the safety device. The operational cycles of the safety device are related to an expected lifetime of the safety device. In other embodiments, the parameters of the risk assessment differ from information available from the safety device indicative of the change of the condition of the safety device and the apparatus includes code executable by the processor to use parameters from the safety device related to the change of the condition of the safety device to calculate the parameters related to the change of the condition of the safety device that are comparable to the parameters of the risk assessment.

In some embodiments, the apparatus includes, in conjunction with setup of the safety device in the machine safety system, code executable by the processor to display a risk assessment user interface prior to receiving the parameters from the risk assessment, wherein the risk assessment user interface facilitates entry of the parameters from the risk assessment. In other embodiments, during operation of the safety device in the machine safety system a signal from the safety device is configured to trigger an action intended to prevent injury to a user and/or damage to equipment of the system with the physical devices. In other embodiments, the apparatus includes the machine safety system.

A computer program product for risk assessment violation monitoring during a functional safety process includes a computer readable storage medium having program code embodied therein. The program code is executable by a processor to receive parameters from a risk assessment of a portion of a system with physical devices. The parameters of the risk assessment are applicable to a safety device of a machine safety system. The safety device is configured to prevent a hazardous condition in the system. The program is code executable by a processor to detect a change of a condition of the safety device. The condition is indicative of a potential safety issue affecting operation of the machine safety system. The program is code executable by a processor to compare parameters related to the change of the condition of the safety device with the parameters from the risk assessment and send an alert in response to determining that the change of the condition of the safety device results in a violation of the risk assessment.

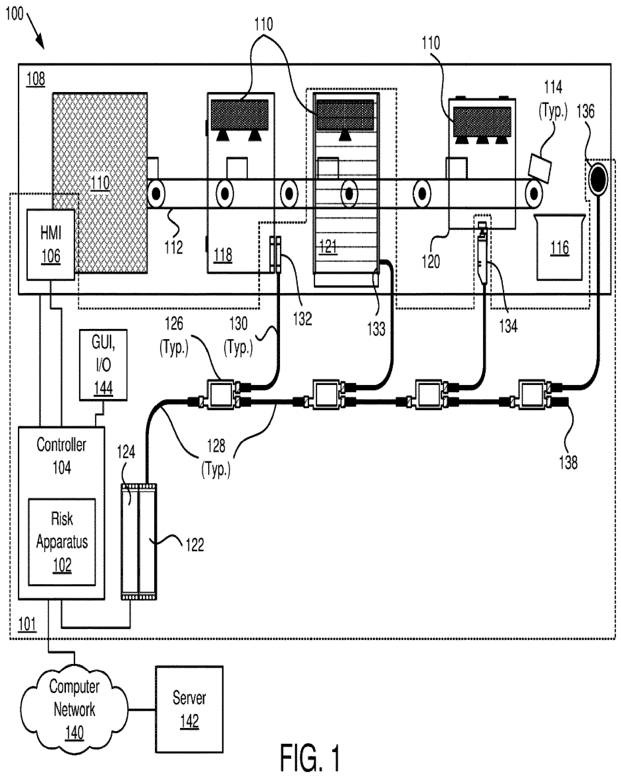

Figure 1 is a schematic block diagram of a system 100 for risk assessment violation monitoring during a functional safety process according to an embodiment. The system 100 includes a risk apparatus 102 in a controller 104, a human-machine interface 106, a manufacturing line 108 with assembly/processing equipment 110, a conveyor belt 112, parts 114 being manufactured, a parts bin 116, access doors 118, 120, an opening 121, a safety relay 122, a network interface 124, connection taps 126, trunk line conductors 128, tap conductors 130, a non-contact switch 132, a light curtain 133, locking switch 134, an emergency stop 136, a terminator 138, a computer network 140, a server 142 and a graphical user interface and input/output devices 144, which are described below.

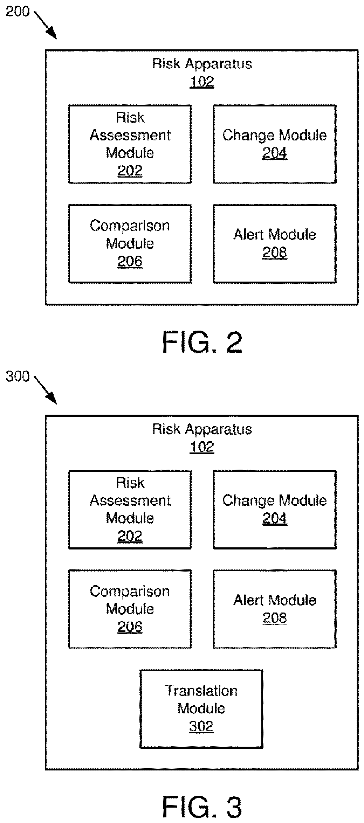

The risk apparatus 102 detects a change in a condition of a safety device and compares parameters of the safety device associated with the change with parameters from a risk assessment involving a location of the safety device to determine if the change of the condition of the safety device results in a violation of the risk assessment. If there is a violation, the risk apparatus 102 sends an alert, which may be used to shut down equipment, sound an alarm, trigger warning lights, alert an operator, etc. Parameters of the risk assessment are input into the risk apparatus 102 for comparison with parameters associated with the safety device. The risk apparatus 102 is described in more detail below with regard to the apparatuses 200, 300 of Figures 2 and 3.

The risk apparatus 102, in some embodiments, is in a controller 104. For example, the controller may a be Logix 5000^{™} Controller by Rockwell Automation^{®} or similar controller. In other embodiments, the controller 104 is a computing device capable of executing program code. The controller 104, in some embodiments includes a processor and memory coupled to the processor. In the embodiment, the risk apparatus 102 may be implemented with program code stored on computer readable storage media, such as a hard disk drive ("HDD"), solid-state storage ("SSD"), or other non-volatile storage where the program code may be loaded into volatile memory, such as dynamic random access memory ("DRAM") or other cache accessible to the processor for execution. In other embodiments, the controller 104 is implemented using a programable hardware device, such as a field programmable gate array ("FPGA"), programmable logic array, etc. for execution of the risk apparatus 102 In other embodiments, the controller 104 includes hardware circuits, such as custom VLSI circuits, gate arrays, etc. for implementation of the risk apparatus 102. In other embodiments, the controller 104 is implemented using a combination of hardware circuits, a programmable hardware device, and/or a processor with memory. One of skill in the art will recognize other ways to implement the risk apparatus 102 on a controller 104.

The controller 104 and risk apparatus 102 are part of a machine safety system 101, such as a GuardLink^{®} system by Rockwell Automation^{®} or other machine safety system. The machine safety system 101 includes safety devices that are installed based on a risk assessment of conditions of a mechanical system or other system with physical devices, such as the manufacturing line 108, to prevent injury and to minimize down time of the mechanical system. The machine safety system 101 may be used to prevent injury from various types of equipment, such as manufacturing equipment, electrical equipment, motors, gears, sprayers, chemical process equipment, and the like. In the embodiment of the system 100 of Figure 1, the machine safety system 101 includes a safety relay 122, a network interface 124, connection taps 126, trunk line conductors 128, tap conductors 130, a non-contact switch 132, a light curtain 133, a locking switch 134, an emergency stop 136, a terminator 138, and other safety devices, sensors, actuators, switches, etc. that are part of a machine safety system 101.

The system 100, in some embodiments, includes a human-machine interface ("HMI") 106, such a control panel, at or near the manufacturing line 108 to allow a user to control and interact with the controller 104 to control the machine safety system 101. The HMI 106 may include a display screen and a means to receive user input.

The manufacturing line 108 is merely representative of a system that may be monitored by a machine safety system 101 that includes the risk apparatus 102. The manufacturing line 108 depicted in Figure 1 includes assembly/processing equipment 110 and a conveyor belt 112 that interact with parts 114 being manufactured. In other embodiments, the mechanical system may include a boiler, a gas turbine, electrical equipment, chemical processing equipment or any other system that can benefit from a machine safety system such as the machine safety system 101 depicted in the system 100 of Figure 1.

The manufacturing line 108, as with most mechanical systems or other system with physical devices, has inherent dangers as well as equipment that may fail. The machine safety system 101 includes components that enable monitoring of hazardous conditions, equipment health, environmental conditions, etc. to increase safety for personnel and to predict and/or detect equipment failure. In some embodiments, the components of the machine safety system 101 help to improve performance of the manufacturing line 108 or other mechanical system. In some embodiments, the machine safety system 101 includes safety devices, sensors and other components that are external to equipment within the manufacturing line 108. In other embodiments, the machine safety system 101 receives input from equipment within the manufacturing line 108/mechanical system.

In some embodiments, the machine safety system 101 includes a network interface 124 connected to a safety relay 122. The network interface 124 provides a network connection to the controller 104. For example, the machine safety system 101 may include one internet protocol ("IP") address and may be able to provide information from safety devices through the single IP address to the controller 104. Such an arrangement beneficially reduces the number of IP addresses for a plant that includes the manufacturing line 108. Other networking interfaces 124 may include more than one IP address, for example, for multiple safety relays 122 or multiple lines from a safety relay 122. A safety device may include a non-contact switch 132, a light curtain 133, a locking switch 134, an emergency stop 136, an actuator, a cable pull switch, a key interlock switch, and the like. In other embodiments, one or more safety devices include an IP address. In other embodiments, the safety devices run on a proprietary network different than an IP network.

In the embodiment depicted in Figure 1, the machine safety system 101 includes trunk line conductors 128 running between connection taps 126. At each connection tap 126, a tap conductor 130 runs to a safety device, such as a non-contact switch 132, a light curtain 133, a locking switch 134, an emergency stop 136, a cable pull switch, etc. In one embodiment, the machine safety system 101 includes a GuardLink^{®} system by Rockwell Automation^{®} or similar machine safety system by another vendor. A safety relay 122 in a GuardLink system, in some embodiments, has capacity for multiple lines where each line can have up to 32 safety devices. In other embodiments, a safety relay 122 in a GuardLink system has capacity for more lines and more safety devices. Other machine safety system 101 may include multiple safety relays 122, an input/output device, etc. which would increase a capacity of the machine safety system 101 to include more safety devices. A GuardLink system has an ability to daisy chain between connection taps 126 without having to loop the trunk line conductor 128 in a loop while meeting applicable safety standards, such being EN/ISO 13849-1 performance level "c" ("PLe") certified by TÜVRheinland^{®} or other applicable certification. Other machine safety systems 101 may include a risk apparatus 102 and include other features and benefits.

In the system 100 of Figure 1, the non-contact switch 132 is on an access door 118 and may be used to monitor when the access door is open. The access door 118 is depicted with two hinges on a left side and the non-contact switch 132 on the right side of the access door 118 where the access door 118 opens. In some embodiments, the machine safety system 101 may send an alert when the non-contact switch 132 senses that the access door 118 is open, which may trigger shutdown of the manufacturing line 108 or other action. In the system 100 of Figure 1, a light curtain 133 protects an opening 121 so that if an object, such as a hand interrupts a beam of light from the light curtain 133, the machine safety system 101 sends an alert. Beams of light for the light curtain 133 are depicted as dotted lines running horizontally between light bars, on a transmitter and on a receiver, located on the right and left sides of the opening 121. In the system 100 of Figure 1, a locking switch 134 maintains an access door 120 closed until a signal releases the locking switch 134. The access door 120 includes two hinges at the top and opens at the bottom where the locking switch 120 is located. An emergency stop 136 senses a button push that triggers the machine safety system 101 to send an alert to shut down the manufacturing line 108 or other alert. Other machine safety systems 101 include other safety devices. The terminator 138 is placed on a terminal of the last connection tap 126 to indicate to the controller 104 that there are no more devices on the trunk line conductors 128 and to let the last connection tap 126 know that this connection tap 126 with the terminator 138 is the last device on the trunk line conductors 128.

In the system 100 of Figure 1, the controller 104 is connected to a server 142 over a computer network 140. The controller 104 may communicate with the server 142 for various purposes. For example, the server 142 may control at least some aspects of the manufacturing line 108. For example, the server 142 may be in contact with one or more motor controllers of the manufacturing line 108 and may control starting and stopping of the manufacturing line 108. In other embodiments, the controller 104 controls the manufacturing line 108 and the server 142 may allow remote access. One of skill in the art will recognize other purposes for the server 142 and configurations to communicate with and control the manufacturing line 108.

In some embodiments, the controller 104 is connected to or includes a graphical user interface ("GUI") and input/output devices 144 that allow a user to interact with the risk apparatus 102 of the controller 104 to enter and view information. For example, the GUI and input/output devices 144 may be an electronic display, keyboard, mouse, etc. In other embodiments, a user may interact with the risk apparatus 102 via the HMI 106 and/or the server 142. In some examples, in conjunction with setup of the safety device in the machine safety system 101, the controller 104 displays a risk assessment user interface prior to receiving the parameters from the risk assessment. The risk assessment user interface facilitates entry of the parameters from the risk assessment. For example, when the safety device is first added to the machine safety system 101, the user interface may prompt a user involved in installing the safety device to enter risk assessment data regarding the safety device. In other embodiments, the user interface allows updating or adding risk assessment information after setup of the safety device.

Typically, the machine safety system 101 is designed using a risk assessment. The risk assessment may include a risk assessment for various parts of a manufacturing line 108 or other mechanical system. For example, a portion of the risk assessment may be directed to the opening 121 that allows access to processing equipment 110. The risk assessment may take into account information such as distance from the opening 121 to the processing equipment 110, a hazard level for the processing equipment 110 accessible via the opening 121, an amount of time required to stop the processing equipment 110 or whole manufacturing line 108, delay from the time that the light curtain 133 is triggered until an alert is sent to controls of the manufacturing line 108, etc. Spacing of beams of light of the light curtain 133 may be categorized as finger penetration, hand penetration, body penetration, etc. For example, one light curtain may be triggered when a finger penetrates the light curtain while another light curtain may be triggered when a hand penetrates the light curtain. The risk assessment takes into account the type of light curtain 133 installed. The risk assessment may require beam spacing for hand penetration where there is sufficient time to stop the hazardous equipment accessible through the opening 121 when a hand reaches through the opening 121.

If initially a hand penetration light curtain 133 is installed in the manufacturing line 108 and at some point the light curtain 133 is replaced, the new light curtain 133 may have different parameters than the original light curtain 133. For example, where a body penetration light curtain 133 replaces the original light curtain 133, a person may be able to reach the hazardous equipment before the machine safety system 101/controller 104 stops the hazardous equipment, which violates parameters of the risk assessment. Where a finger penetration light curtain 133 is used as a replacement, the light curtain 133 may trip faster than the original light curtain 133, which would be acceptable. In other embodiments, a hand penetration light curtain 133 may run slower than the original hand penetration light curtain 133, which may also cause a violation of the parameter of the risk assessment.

In other embodiments, a safety device, such as a non-contact switch 132, is expected to fail after a particular number of operational cycles and a risk assessment may plan on a particular rate of operational cycles. Where actual operational cycles occur faster than expected, the safety device may fail sooner than expected. In other embodiments, environmental conditions may affect an expected operational life of a safety device. Thus, various changes to safety devices over time affect risk for personnel and equipment and a change in parameters of a safety device may violate a risk assessment applicable to the safety device.

Traditionally, a risk assessment is only used during design of the machine safety system 101 so that where a safety device is replaced with another safety device, personnel must find the original risk assessment documents and must verify that changed parameters of the safety device when compared to parameters of the risk assessment still comply with the risk assessment. This manual recalculation is cumbersome and may be ignored by personnel, which may result in an unplanned hazard due to changes in the parameters of a safety device.

Figure 2 is a schematic block diagram of an apparatus 200 for risk assessment violation monitoring during a functional safety process according to an embodiment. The apparatus 200 includes one embodiment of the risk apparatus 102 that includes a risk assessment module 202, a change module 204, a comparison module 206, and an alert module 208, which are described below. In various embodiments, the modules 202-208 are implemented in program code, using a programmable hardware device and/or hardware circuits and may be implemented as described above for the system 100 of Figure 1 for the risk apparatus 102 and/or controller 104.

The apparatus 200 includes a risk assessment module 202 configured to receive parameters from a risk assessment of a portion of the system 100 with physical devices. The parameters of the risk assessment are applicable for a safety device (e.g. 130, 131, 132 or the like) of the machine safety system 101. The safety device is configured to prevent a hazardous condition in the system 100. In some embodiments, the risk assessment parameters include parameters of an originally installed safety device, distances, time delays, equipment hazard information or any other information relevant to a risk assessment regarding installation of a safety device to protect personnel and/or equipment protected by the safety device. In other embodiments, the risk assessment parameters include parameters for multiple safety devices protecting the equipment.

The risk assessment module 202, in some embodiments, is configured to receive parameters of the risk assessment from a user and may include a user interface customized to receive risk assessment parameters. For example, the risk assessment module 202 may include a user interface that requests risk assessment parameters regarding each safety device of the machine safety system 101. In other examples, once a safety device is added to the machine safety system 101 the risk assessment module 202 may then present a form for entering risk assessment parameters for the safety device.

Where the safety device is a light curtain 133, the risk assessment module 202 may present a user interface for the light curtain 133 that asks for beam spacing, distance from the light curtain 133 to processing equipment 110 protected by the light curtain 133, applicable time delays, and the like. In some embodiments, the risk assessment module 202 retrieves a portion of the risk information for a safety device from a database based on information retrieved from the safety device, such as a model number. In other embodiments, the risk assessment module 202 retrieves risk assessment parameters directly from the safety device. One of skill in the art will recognize other ways for the risk assessment module 202 to receive risk assessment parameters.

The apparatus 200 includes a change module 204 configured to detect a change of a condition of the safety device. The condition is indicative of a potential safety issue affecting operation of the machine safety system 101. For example, a safety device may be replaced with a new safety device with parameters different than the safety device being replaced. The change module 204 may detect that the new safety device has one or more parameters that differ from a previously installed safety device. For example, the change module 204 may determine merely that a safety device is new and may then retrieve parameters of the safety device that pertain to the risk assessment or at least allow the change module 204 to retrieve parameter for the new safety device. In other embodiments, the change module 204 receives parameters for the new safety device from a user.

As an example, a locking switch 134 of the machine safety system 101 may be replaced by a new locking switch 134. The locking switch 134 being replaced may be a magnetic lock and may have a particular holding force parameter expressed in newtons. The new locking switch 134 may have a lower holding force so that the change module 204 determines that there is a change in a parameter related to a risk assessment for the locking switch 134 and processing equipment 110 protected by the locking switch 134. The change module 204 may retrieve the holding force parameter from the new locking switch 134, from user input related to the new locking switch 134, from a database of parameters for the model number of the new locking switch 134, etc. One of skill in the art will recognize other ways for the change module 204 to detect a change of a condition of a safety device.

In some embodiments, the change module 204 determining the change of the condition of the safety device includes determining that a parameter of the safety device has changed resulting in the safety device operating differently than prior to the change of the parameter. For example, the change module 204 may determine that an intensity of light received by a receiver light stick of a light curtain 133 has changed, from degradation of the light curtain 133, from misalignment of the light curtain 133, damage to the light curtain 133, or the like.

In some embodiments, the change module 204 determining the change of the condition of the safety device includes determining that operational cycles of the safety device are higher than an expected amount of operational cycles for the safety device, wherein the operational cycles of the safety device are related to an expected lifetime of the safety device. For example, the risk assessment for a non-contact switch 132 may include a particular number of operations per day and the change module 204 may determine that the non-contact switch 132 may determine that actual operations for the non-contact switch 132 are higher than the operations per day of the risk assessment, which may result in a higher risk of failure of the non-contact switch 132. In various embodiments, operational cycles may include number of times a device operates, an amount of time that a safety device is operational, or other metric to measure an expected lifetime of the safety device.

In other embodiments, the change module 204 determining the change of the condition of the safety device includes a change of a safety system configuration which involves a safety device. For example, an updated risk assessment, changes to a physical layout, etc. may result in changes to a safety system configuration which would result in conditions of a current safety device being different than updated requirements for the safety device. In one example, a change to a layout of equipment protected by a light curtain 133 may result in a requirement of closer spacing of beams of the light curtain 133 so that conditions of the current light curtain 133 are different than updated requirements.

The apparatus 200 includes a comparison module 206 configured to compare parameters related to the change of the condition of the safety device with the parameters from the risk assessment. For example, the comparison module 206 receive parameters for a safety device from the change module 204 identified as changed and may compare the changed parameters with corresponding parameters from the risk assessment for the safety device. Where the safety device is a locking switch 134 replacing an original locking switch 134 and the changed parameter is the holding force for the locking switch 134, the comparison module 206 may compare the holding force for the new locking switch 134 with a holding force from the risk assessment for the locking switch 134.

In some embodiments, the comparison module 206 compares parameters related to the change of the condition of the safety device with a range of related parameters from the risk assessment. For example, the risk assessment may include a range of acceptable values for a parameter and the comparison module 206 may compare a parameter related to the change of the condition of the safety device with the range to determine if the parameter related to the change of the condition of the safety device is within the range. In some embodiments, the comparison module 206 compares more than one parameter identified as changed by the change module 204 with associated parameters from the risk assessment.

The apparatus 200 includes an alert module 208 configured to send an alert in response to the comparison module 206 determining that the change of the condition of the safety device results in a violation of the risk assessment. For example, a parameter from the risk assessment may represent a threshold and the comparison module 206 may determine that a changed parameter identified by the change module 204 exceeds the threshold. In other embodiments, the alert module 208 and/or comparison module 206 determine that the changed parameter identified by the change module 204 violates the risk assessment in some other way, such as exceeding a specification, violating a standard, being out of compliance with the risk assessment, etc.

In some embodiments, the alert module 208 sends an alert that results in shutdown of equipment protected by the safety device. In other embodiments, the alert results in an alarm sound, flashing lights, or other indicator to personnel near the safety device and/or equipment protected by the safety device.

In some embodiments, violation of the risk assessment indicates that the safety device being replaced is not compliant and the alert module 208 sends an alert that alerts a user that the safety device is incompatible with the risk assessment, In other embodiments, violation of the risk assessment indicates that the safety device has degraded, has reached the end of a projected lifetime of the safety device, is not functioning properly, etc. and the alert indicates to a user that the safety device should be replaced. One of skill in the art will recognize other alerts and effects of an alert sent by the alert module 208.

Figure 3 is a schematic block diagram of another apparatus 300 for risk assessment violation monitoring during a functional safety process according to an embodiment. The apparatus 300 includes another embodiment of the risk apparatus 102 that includes a risk assessment module 202, a change module 204, a comparison module 206. and an alert module 208, which are substantially similar to those described in relation to the apparatus 200 of Figure 2. The apparatus 300 also includes a translation module 302, which is described below. The apparatus 300, in some embodiments, is implemented similar to the apparatus 200 of Figure 2.

The apparatus 300 includes a translation module 302 that uses parameters from the safety device related to the change of the condition of the safety device to calculate the parameters related to the change of the condition of the safety device that are comparable to the parameters of the risk assessment. For example, the change module 204 may detect a change of condition of the safety device and associated parameters which may not be comparable to parameters used by the comparison module 206 and the translation module 302 may then use the parameters identified by the change module 204 to calculate parameters suitable for comparison with the parameters of the risk assessment.

For example, the safety device may be a non-contact switch 132 that has a risk of failure based on a particular life expectancy curve. The life expectancy may be affected by operational cycles as well as temperature. The change module 204 may detect a change of condition of the non-contact switch 132 of an operational rate above an expected amount. The translation module 302 may use operational cycles of the non-contact switch 132 along with temperature to determine where on the non-contact switch 132 is at on the life expectancy curve and the comparison module 206 may then compare where the non-contact switch 132 is at on the life expectancy curve with a threshold value for replacement of the non-contact switch 132 to determine whether or not to send an alert.

In another example, the change module 204 may identify an increase in operational speed of a new light curtain 133 along with an increase in spacing of beams of the light curtain 133. The translation module 302 may then calculate an amount of penetration of the light curtain 133 by a person before triggering of the light curtain 133 and the comparison module 206 may then compare the calculated amount of penetration with an allowable amount of penetration of the risk assessment for the alert module 208 to determine whether or not to send an alert notifying a user that the new light curtain 133 is not acceptable. One of skill in the art will recognize other ways that the translation module 302 is able use parameters of a safety device to calculate parameters suitable for the comparison module 206 to compare with parameters of the risk assessment.

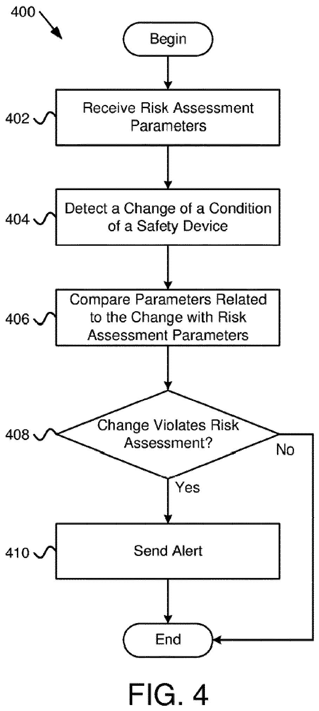

Figure 4 is a flowchart diagram illustrating a method 400 for risk assessment violation monitoring during a functional safety process according to an embodiment. The method 400 begins and receives 402 parameters from a risk assessment of a portion of a system 100 with physical devices, such as assembly/processing equipment 110 from a manufacturing line 108. The parameters of the risk assessment are applicable a safety device (e.g. 132, 133, 134, etc.) of a machine safety system 101. The safety device is configured to prevent a hazardous condition in the system 100.

The method 400 detects 404 a change of a condition of the safety device. The condition is indicative of a potential safety issue affecting operation of the machine safety system 101. For example, the method 400 may detect a replacement of the safety device. The method 400 compares 406 parameters related to the change of the condition of the safety device with the parameters from the risk assessment and determines 408 if the changed parameters violate the risk assessment. If the method 400 determines 408 that the changed parameters do not violate the risk assessment, the method 400 ends. If the method 400 determines 408 that the changed parameters violate the risk assessment, the method 400 sends 410 an alert and the method 400 ends. In various embodiments, the method 400 is partially or fully implemented using one or more of the risk assessment module 202, the change module 204, the comparison module 206 and the alert module 208.

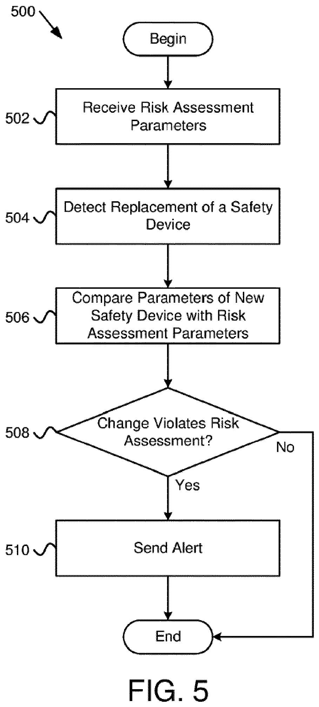

Figure 5 is a flowchart diagram illustrating another method 500 for risk assessment violation monitoring during a functional safety process where a safety device has been changed according to an embodiment. The method 500 begins and receives 502 risk assessment parameters from a risk assessment for at least a portion of the system 100 with a safety device being replaced, such as a locking switch 134. The parameters of the risk assessment are applicable to a safety device of a machine safety system 101. The safety device is configured to prevent a hazardous condition in the system 100. For example, where the safety device is a locking switch 134, the locking switch 134 may prevent opening of an access door 120 to keep personnel from reaching in an touching processing equipment 110 while operational.

The method 500 detects 504 replacement of the safety device and compares 506 parameters of a new safety device with risk assessment parameters applicable to the previous safety device. The method 500 determines 508 if the parameters of the new safety device violate the risk assessment. If the method 500 determines 508 that the parameters of the new safety device do not violate the risk assessment, the method 500 ends. If the method 500 determines 508 that the parameters of the new safety device violate the risk assessment, the method 500 sends 510 an alert and the method 500 ends. For example, where the safety device is a locking switch 143, the method 500 may determine 508 a holding force of the new locking switch 134 is below an allowable holding force from the risk assessment and may then send 510 an alert with a warning that the new locking switch 134 is not acceptable. In various embodiments, the method 500 is partially or fully implemented using one or more of the risk assessment module 202, the change module 204, the comparison module 206, the alert module 208 and the translation module 302.

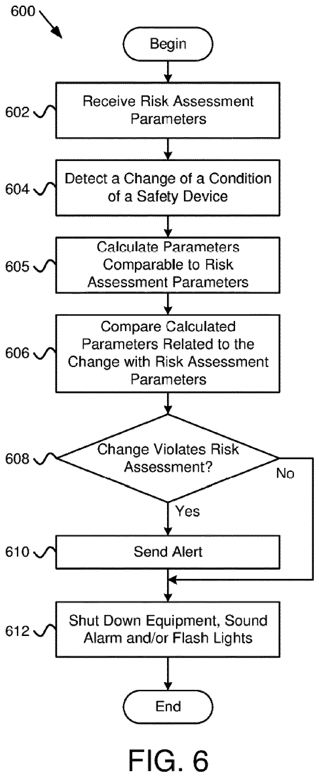

Figure 6 is a flowchart diagram illustrating another method 600 for risk assessment violation monitoring during a functional safety process according to an embodiment. The method 600 begins and receives 602 parameters from a risk assessment of a portion of a system 100 with physical devices, such as assembly/processing equipment 110 from a manufacturing line 108. The parameters of the risk assessment are applicable a safety device (e.g. 132, 133, 134, etc.) of a machine safety system 101. The safety device is configured to prevent a hazardous condition in the system 100.

The method 600 detects 604 a change of a condition of the safety device. The condition is indicative of a potential safety issue affecting operation of the machine safety system 101. For example, the method 600 may detect a replacement of the safety device, degradation of the safety device, etc. In the embodiment, the parameters of the risk assessment differ from information available from the safety device indicative of the change of the condition of the safety device. For example, the safety device may be a light curtain 133 and may include a parameter of distance between light beams where the risk assessment may include one or more equations that use a distance between light beams along with a distance between the light curtain 133 and the equipment, equipment shutdown time, propagation delay, expected speed of body part crossing the light curtain 133, etc. to determine how far the body part would intrude past the light curtain 133 and how close the body part would come to the equipment before the equipment is stopped.

The risk assessment may include a parameter of a 1 meter barrier around the equipment. The method 600 uses parameters from the safety device related to the change of the condition of the safety device to calculate 605 the parameters related to the change of the condition of the safety device that are comparable to the parameters of the risk assessment. For example, the method 600 may use beam spacing of a new light curtain 133 to calculate 605 a distance from equipment that a body part will be after penetrating the light curtain 133 before shutdown of the protected equipment. The method 600 then compares 606 the calculated parameters related to the change of the condition of the safety device with the parameters from the risk assessment and determines 608 if the changed parameters violate the risk assessment. If the method 600 determines 608 that the calculated parameters do not violate the risk assessment, the method 600 ends. If the method 600 determines 608 that the changed parameters violate the risk assessment, the method 600 sends 610 an alert, shuts down 612 equipment, sounds alarms, flashes lights, etc., and the method 600 ends. In various embodiments, the method 600 is partially or fully implemented using one or more of the risk assessment module 202, the change module 204, the comparison module 206, the alert module 208 and the translation module 302.

This description uses examples to disclose the invention and also to enable any person skilled in the art to practice the invention, including making and using any devices or systems and performing any incorporated methods. The patentable scope of the invention is defined by the claims and may include other examples that occur to those skilled in the art. Such other examples are intended to be within the scope of the claims if they have structural elements that do not differ from the literal language of the claims, or if they include equivalent structural elements with insubstantial differences from the literal language of the claims.

**The following is a list of further preferred embodiments of the invention:**
Embodiment 1: A method comprising:
   receiving parameters from a risk assessment of a portion of a system with physical devices, the parameters of the risk assessment applicable to a safety device of a machine safety system, the safety device configured to prevent a hazardous condition in the system;
   detecting a change of a condition of the safety device, the condition indicative of a potential safety issue affecting operation of the machine safety system;
   comparing parameters related to the change of the condition of the safety device with the parameters from the risk assessment; and
   sending an alert in response to determining that the change of the condition of the safety device results in a violation of the risk assessment.
Embodiment 2: The method of embodiment 1, wherein the change of the condition of the safety device comprises replacing the safety device with a new safety device comprising parameters different from the safety device being replaced and detecting the change of the condition of the safety device comprises detecting that one or more parameters of the new safety device differ from parameters of the safety device being replaced.
Embodiment 3: The method of embodiment 2, wherein comparing the parameters related to the change of the condition of the safety device with the parameters from the risk assessment comprises comparing the parameters of the new safety device that differ from the parameters of the safety device being replaced with applicable parameters of the risk assessment.
Embodiment 4: The method of embodiment 3, wherein determining that the change of the condition of the safety device results in a violation of the parameters from the risk assessment comprises determining that at least one parameter of the new safety device that differs from the parameters of the safety device being replaced results in a violation of the parameters from the risk assessment such that the machine safety system with the new safety device is out of compliance with the risk assessment.
Embodiment 5: The method of embodiment 1, wherein determining the change of the condition of the safety device comprises determining that a parameter of the safety device has changed resulting in the safety device operating differently than prior to the change of the parameter.
Embodiment 6: The method of embodiment 1, wherein determining the change of the condition of the safety device comprises determining that operational cycles of the safety device are higher than an expected amount of operational cycles for the safety device, wherein the operational cycles of the safety device are related to an expected lifetime of the safety device.
Embodiment 7: The method of embodiment 1, wherein the parameters of the risk assessment differ from information available from the safety device indicative of the change of the condition of the safety device and further comprising using parameters from the safety device related to the change of the condition of the safety device to calculate the parameters related to the change of the condition of the safety device that are comparable to the parameters of the risk assessment.
Embodiment 8: The method of embodiment 1, further comprising, in conjunction with setup of the safety device in the machine safety system, displaying a risk assessment user interface prior to receiving the parameters from the risk assessment, wherein the risk assessment user interface facilitates entry of the parameters from the risk assessment.
Embodiment 9: The method of embodiment 1, wherein during operation of the safety device in the machine safety system a signal from the safety device is configured to trigger an action intended to prevent injury to a user and/or damage to equipment of the system with the physical devices.
Embodiment 10: The method of embodiment 1, wherein a violation of the parameters of the risk assessment results in a hazardous condition during operation of the system with physical devices.
Embodiment 11: An apparatus comprising:
   a processor; and
   a memory that stores code executable by the processor to:
      receive parameters from a risk assessment of a portion of a system with physical devices, the parameters of the risk assessment applicable to a safety device of a machine safety system, the safety device configured to prevent a hazardous condition in the system;
      detect a change of a condition of the safety device, the condition indicative of a potential safety issue affecting operation of the machine safety system;
      compare parameters related to the change of the condition of the safety device with the parameters from the risk assessment; and
      send an alert in response to determining that the change of the condition of the safety device results in a violation of the risk assessment.
Embodiment 12: The apparatus of embodiment 11, wherein the change of the condition of the safety device comprises replacing the safety device with a new safety device comprising parameters different from the safety device being replaced and the code executable by the processor to detect the change of the condition of the safety device comprises code executable by the processor to detect that one or more parameters of the new safety device differ from parameters of the safety device being replaced.
Embodiment 13: The apparatus of embodiment 12, wherein the code executable by the processor to compare the parameters related to the change of the condition of the safety device with the parameters from the risk assessment comprises code executable by the processor to compare the parameters of the new safety device that differ from the parameters of the safety device being replaced with applicable parameters of the risk assessment.
Embodiment 14: The apparatus of embodiment 13, wherein the code executable by the processor to determine that the change of the condition of the safety device results in a violation of the parameters from the risk assessment comprises code executable by the processor to determine that at least one parameter of the new safety device that differs from the parameters of the safety device being replaced results in a violation of the parameters from the risk assessment such that the machine safety system with the new safety device is out of compliance with the risk assessment.
Embodiment 15: The apparatus of embodiment 11, wherein the code executable by the processor to determine the change of the condition of the safety device comprises code executable by the processor to determine that a parameter of the safety device has changed resulting in the safety device operating differently than prior to the change of the parameter.
Embodiment 16: The apparatus of embodiment 11, wherein the code executable by the processor to determine the change of the condition of the safety device comprises code executable by the processor to determine that operational cycles of the safety device are higher than an expected amount of operational cycles for the safety device, wherein the operational cycles of the safety device are related to an expected lifetime of the safety device.
Embodiment 17: The apparatus of embodiment 11, wherein the parameters of the risk assessment differ from information available from the safety device indicative of the change of the condition of the safety device and further comprising code executable by the processor to use parameters from the safety device related to the change of the condition of the safety device to calculate the parameters related to the change of the condition of the safety device that are comparable to the parameters of the risk assessment.
Embodiment 18: The apparatus of embodiment 11, further comprising, in conjunction with setup of the safety device in the machine safety system, code executable by the processor to display a risk assessment user interface prior to receiving the parameters from the risk assessment, wherein the risk assessment user interface facilitates entry of the parameters from the risk assessment.
Embodiment 19: The apparatus of embodiment 11, further comprising the machine safety system.
Embodiment 20: A computer program product comprising a computer readable storage medium having program code embodied therein, the program code executable by a processor to:
   receive parameters from a risk assessment of a portion of a system with physical devices, the parameters of the risk assessment applicable to a safety device of a machine safety system, the safety device configured to prevent a hazardous condition in the system;
   detect a change of a condition of the safety device, the condition indicative of a potential safety issue affecting operation of the machine safety system;
   compare parameters related to the change of the condition of the safety device with the parameters from the risk assessment; and
   send an alert in response to determining that the change of the condition of the safety device results in a violation of the risk assessment.

## Claims

1. A method comprising:
receiving parameters from a risk assessment of a portion of a system with physical devices, the parameters of the risk assessment applicable to a safety device of a machine safety system, the safety device configured to prevent a hazardous condition in the system;
detecting a change of a condition of the safety device, the condition indicative of a potential safety issue affecting operation of the machine safety system;
comparing parameters related to the change of the condition of the safety device with the parameters from the risk assessment; and
sending an alert in response to determining that the change of the condition of the safety device results in a violation of the risk assessment.

2. The method of claim 1, wherein the change of the condition of the safety device comprises replacing the safety device with a new safety device comprising parameters different from the safety device being replaced and detecting the change of the condition of the safety device comprises detecting that one or more parameters of the new safety device differ from parameters of the safety device being replaced.

3. The method of claim 2, wherein comparing the parameters related to the change of the condition of the safety device with the parameters from the risk assessment comprises comparing the parameters of the new safety device that differ from the parameters of the safety device being replaced with applicable parameters of the risk assessment.

4. The method of claim 3, wherein determining that the change of the condition of the safety device results in a violation of the parameters from the risk assessment comprises determining that at least one parameter of the new safety device that differs from the parameters of the safety device being replaced results in a violation of the parameters from the risk assessment such that the machine safety system with the new safety device is out of compliance with the risk assessment.

5. The method of one of claims 1 to 4, wherein determining the change of the condition of the safety device comprises determining that a parameter of the safety device has changed resulting in the safety device operating differently than prior to the change of the parameter.

6. The method of one of claims 1 to 5, wherein determining the change of the condition of the safety device comprises determining that operational cycles of the safety device are higher than an expected amount of operational cycles for the safety device, wherein the operational cycles of the safety device are related to an expected lifetime of the safety device.

7. The method of one of claims 1 to 6, wherein the parameters of the risk assessment differ from information available from the safety device indicative of the change of the condition of the safety device and further comprising using parameters from the safety device related to the change of the condition of the safety device to calculate the parameters related to the change of the condition of the safety device that are comparable to the parameters of the risk assessment.

8. The method of one of claims 1 to 7, further comprising, in conjunction with setup of the safety device in the machine safety system, displaying a risk assessment user interface prior to receiving the parameters from the risk assessment, wherein the risk assessment user interface facilitates entry of the parameters from the risk assessment; or
wherein during operation of the safety device in the machine safety system a signal from the safety device is configured to trigger an action intended to prevent injury to a user and/or damage to equipment of the system with the physical devices; or
wherein a violation of the parameters of the risk assessment results in a hazardous condition during operation of the system with physical devices.

9. An apparatus comprising:
a processor; and
a memory that stores code executable by the processor to:
receive parameters from a risk assessment of a portion of a system with physical devices, the parameters of the risk assessment applicable to a safety device of a machine safety system, the safety device configured to prevent a hazardous condition in the system;
detect a change of a condition of the safety device, the condition indicative of a potential safety issue affecting operation of the machine safety system;
compare parameters related to the change of the condition of the safety device with the parameters from the risk assessment; and
send an alert in response to determining that the change of the condition of the safety device results in a violation of the risk assessment.

10. The apparatus of claim 9, wherein the change of the condition of the safety device comprises replacing the safety device with a new safety device comprising parameters different from the safety device being replaced and the code executable by the processor to detect the change of the condition of the safety device comprises code executable by the processor to detect that one or more parameters of the new safety device differ from parameters of the safety device being replaced; and/or
wherein the code executable by the processor to compare the parameters related to the change of the condition of the safety device with the parameters from the risk assessment comprises code executable by the processor to compare the parameters of the new safety device that differ from the parameters of the safety device being replaced with applicable parameters of the risk assessment; and/or
wherein the code executable by the processor to determine that the change of the condition of the safety device results in a violation of the parameters from the risk assessment comprises code executable by the processor to determine that at least one parameter of the new safety device that differs from the parameters of the safety device being replaced results in a violation of the parameters from the risk assessment such that the machine safety system with the new safety device is out of compliance with the risk assessment.

11. The apparatus of claim 9 to 11, wherein the code executable by the processor to determine the change of the condition of the safety device comprises code executable by the processor to determine that a parameter of the safety device has changed resulting in the safety device operating differently than prior to the change of the parameter.

12. The apparatus of claim 9 to 11, wherein the code executable by the processor to determine the change of the condition of the safety device comprises code executable by the processor to determine that operational cycles of the safety device are higher than an expected amount of operational cycles for the safety device, wherein the operational cycles of the safety device are related to an expected lifetime of the safety device.

13. The apparatus of claim 9 to 12, wherein the parameters of the risk assessment differ from information available from the safety device indicative of the change of the condition of the safety device and further comprising code executable by the processor to use parameters from the safety device related to the change of the condition of the safety device to calculate the parameters related to the change of the condition of the safety device that are comparable to the parameters of the risk assessment.

14. The apparatus of claim 9 to 13, further comprising, in conjunction with setup of the safety device in the machine safety system, code executable by the processor to display a risk assessment user interface prior to receiving the parameters from the risk assessment, wherein the risk assessment user interface facilitates entry of the parameters from the risk assessment; or
further comprising the machine safety system.

15. A computer program product comprising a computer readable storage medium having program code embodied therein, the program code executable by a processor to:
receive parameters from a risk assessment of a portion of a system with physical devices, the parameters of the risk assessment applicable to a safety device of a machine safety system, the safety device configured to prevent a hazardous condition in the system;
detect a change of a condition of the safety device, the condition indicative of a potential safety issue affecting operation of the machine safety system;
compare parameters related to the change of the condition of the safety device with the parameters from the risk assessment; and
send an alert in response to determining that the change of the condition of the safety device results in a violation of the risk assessment.
